# EUROPEAN PATENT APPLICATION

(11) **EP 2 884 143 A1**
(43) Date of publication of application: **17.06.2015**
(21) Application number: 12882682.3
(22) Date of filing: 10.08.2012
(51) Int. Cl.: F16K 31/06

(54) **SOLENOID VALVE**

(71) Applicant: Toyota Jidosha Kabushiki Kaisha, Toyota-shi, Aichi 471-8571 (JP)
(72) Inventor: SATO Kei, Toyota-shi Aichi 471-8571 (JP); YAMADA Akihiro, Toyota-shi Aichi 471-8571 (JP); NANAHARA Masaki, Toyota-shi Aichi 471-8571 (JP)
(74) Representative: Winter, Brandl, Fürniss, Hübner, Röss, Kaiser, Polte - Partnerschaft mbB
(86) International application number: PCT/JP2012/070471
(87) International publication number: WO 2014/024300

(57) **Abstract**

An electromagnetic valve includes a housing, a plunger, a spring, and a solenoid. The housing includes a cylindrical guide member configured to assist axial movement of the plunger, a seat member assembled to the guide member with a valve hole formed therein, a stationary core arranged so as to be opposed to an end portion of the guide member at a predetermined distance away therefrom in an axial direction, and a sleeve coupled, in a liquid-tight manner, to each of an outer circumference of an end portion of the stationary core and an outer circumference of the end portion of the guide member so as to integrally couple the stationary core and the guide member to each other. The plunger has formed therein a communication hole passing through the plunger in the axial direction so as to communicate to a passage (communicating to an inlet port and an outlet port) at one end and to a receiving portion of the spring at the other end, and a path for communicating the communication hole and a space portion formed on an inner side of the sleeve at a position between the end portion of the stationary core and the end portion of the guide member. Accordingly, when the working liquid is caused to flow from the inlet port toward the outlet port, the working liquid is caused to flow into the communication hole through the path, and thus air inside the electromagnetic valve can be discharged to the outside by the working liquid flowing from the passage out of the housing.

## Description

### Technical Field

The present invention relates to an electromagnetic valve, for example, an electromagnetic valve to be assembled to a hydraulic control device for a hydraulic brake device for a vehicle, and to be used for hydraulic control of a brake fluid (working liquid).

### Background Art

In general, this type of electromagnetic valve includes:
a housing having an inlet port and an outlet port for a working liquid, a passage for communicating the ports to each other, and a valve hole formed in the passage with a valve seat formed at one end portion of the valve hole;
a plunger received in the housing so as to be movable in an axial direction, the plunger including a valve portion seatable on and unseatable from the valve seat;
a spring received in the housing so as to bias the plunger in the axial direction; and
a solenoid assembled to the housing so as to generate an attractive force against a load (biasing force) of the spring for the plunger through energization.

When air (air bubble) exists inside the electromagnetic valve, self-excited vibration may occur due to the air. Therefore, before the electromagnetic valve is used (that is, when the working liquid is filled into the electromagnetic valve), the air stagnating (remaining) inside the electromagnetic valve needs to be discharged to the outside. There have been proposed various means for discharging the air inside the electromagnetic valve to the outside, one of which is disclosed in Patent Literature 1.

The electromagnetic valve disclosed in Patent Literature 1 includes a washer provided at an end portion of the plunger on the spring side so as to fill a gap generated in the axial direction at a position between the plunger and the housing (gap generated at an axial end portion of a receiving portion of the spring). Further, the electromagnetic valve has communication holes each passing through the plunger in the axial direction so as to communicate to the passage at one end and to the receiving portion of the spring at the other end. Therefore, when the plunger moves in the axial direction, the washer also moves in the axial direction so that the air stagnating in that portion is pushed toward the communication holes, to thereby discharge the air toward the passage through the communication holes. Note that, the air discharged to the passage is further discharged to the outside together with the working liquid flowing from the inlet port toward the outlet port.

### Citation List

### Patent Literature

[PTL1]JP 2011-38542 A

### Summary of Invention

Incidentally, the electromagnetic valve disclosed in Patent Literature 1 is capable of discharging, to the outside, the air stagnating in the portion that may be reached by the above-mentioned washer through the axial movement, but may be incapable of discharging, to the outside, air stagnating in a portion other than the above-mentioned portion (for example, a space portion formed in the housing itself or the entire receiving portion of the spring).

The present invention has been made to solve the above-mentioned problem (to discharge, to the outside, air stagnating in, for example, a space portion formed in a housing itself or a receiving portion of the spring).

According to one embodiment of the present invention (claim 1), there is provided an electromagnetic valve, including:
a housing having an inlet port and an outlet port for a working liquid, a passage for communicating the inlet port and the outlet port to each other, and a valve hole formed in the passage with a valve seat formed at one end portion of the valve hole;
a plunger received in the housing so as to be movable in an axial direction of the plunger, the plunger including a valve portion seatable on and unseatable from the valve seat;
a spring received in the housing so as to bias the plunger in the axial direction; and
a solenoid assembled to the housing so as to generate an attractive force against a load of the spring for the plunger through energization,
the housing including:
   a guide member having a cylindrical shape and being configured to assist axial movement of the plunger;
   a seat member assembled to the guide member with the valve hole formed therein;
   a stationary core arranged so as to be opposed to an end portion of the guide member at a predetermined distance away from the guide member in the axial direction; and
   a sleeve coupled, in a liquid-tight manner, to each of an outer circumference of an end portion of the stationary core and an outer circumference of the end portion of the guide member so as to integrally couple the stationary core and the guide member to each other,
the plunger having formed therein:
   a communication hole passing through the plunger in the axial direction so as to communicate to the passage at one end of the communication hole and to a receiving portion of the spring at another end of the communication hole; and
   a path for communicating the communication hole and a space portion formed on an inner side of the sleeve at a position between the end portion of the stationary core and the end portion of the guide member.

In this electromagnetic valve (electromagnetic valve according to claim 1), when the working liquid is filled into the electromagnetic valve, the working liquid is caused to flow toward the plunger through the valve hole under a state in which the valve portion is unseated from the valve seat. Then, a part of the working liquid is caused to flow toward a connection portion between the space portion and the path through a gap between the plunger and the guide member. Further, the working liquid flowing into the connection portion between the space portion and the path is then caused to flow toward the passage through the path and the communication hole. At this time, the working liquid flowing from the connection portion between the space portion and the path toward the passage through the path and the communication hole guides air (air bubble) stagnating in the space portion to the passage. Note that, the air (air bubble) guided to the passage is further guided out of the housing by the working liquid flowing from the passage out of the housing.

Therefore, in a case where the seat member has the inlet port and the guide member has the outlet port, and in a case where the inlet port and the valve hole directly communicate to each other, when the working liquid is caused to flow from the inlet port toward the outlet port, the air inside the electromagnetic valve (including the air bubble stagnating in the space portion) can be discharged to the outside (out of the housing). Note that, in a case where the seat member has the outlet port and the guide member has the inlet port, the working liquid is caused to flow from the outlet port toward the inlet port only during air discharging work, and thus the air inside the electromagnetic valve can be discharged to the outside as described above.

Thus, the present invention is suitably applicable to the electromagnetic valve in which the housing includes the guide member having the cylindrical shape and being configured to assist the axial movement of the plunger, the seat member assembled to the guide member with the valve hole formed therein, the stationary core arranged so as to be opposed to the end portion of the guide member at the predetermined distance away from the guide member in the axial direction, and the sleeve coupled, in a liquid-tight manner, to each of the outer circumference of the end portion of the stationary core and the outer circumference of the end portion of the guide member so as to integrally couple the stationary core and the guide member to each other, and the space portion (region in which a magnetic path is not easily formed) is formed on the inner side of the sleeve at the position between the end portion of the stationary core and the end portion of the the guide. In this electromagnetic valve, the guide member, the stationary core, the plunger, and the like are each made of a magnetic material, and the sleeve is made of a non-magnetic material. Therefore, a desired magnetic path can appropriately be formed between the housing and the plunger, thereby being capable of attaining desired performance.

According to one embodiment of the present invention (claim 2), there is provided an electromagnetic valve, including:
a housing having an inlet port and an outlet port for a working liquid, a passage for communicating the inlet port and the outlet port to each other, and a valve hole formed in the passage with a valve seat formed at one end portion of the valve hole;
a plunger received in the housing so as to be movable in an axial direction of the plunger, the plunger including a valve portion seatable on and unseatable from the valve seat;
a spring received in the housing so as to bias the plunger in the axial direction; and
a solenoid assembled to the housing so as to generate an attractive force against a load of the spring for the plunger through energization,
the plunger having formed therein:
   a communication hole passing through the plunger in the axial direction so as to communicate to the passage at one end of the communication hole and to a receiving portion of the spring at another end of the communication hole;
   a spring receiving hole formed at another end portion of the plunger so as to receive the spring; and
   a path for communicating the spring receiving hole and the communication hole to each other.

In this electromagnetic valve (electromagnetic valve according to claim 2), when the working liquid is filled into the electromagnetic valve, due to such arrangement that the communication hole is positioned above the spring receiving hole, air (air bubble) stagnating in the spring receiving hole can be guided to the communication hole through the path with a buoyant force of the air. Further, when the working liquid is caused to flow toward the plunger through the valve hole under the state in which the valve portion is unseated from the valve seat, a part of the working liquid is caused to flow toward the other end portion of the plunger through the gap between the plunger and the guide member (when a plurality of communication holes are formed, a part of the communication holes). Still further, the working liquid flowing into the other end portion of the plunger is then caused to flow toward the passage through the communication hole (when a plurality of communication holes are formed, the remaining communication holes). At this time, the air (air bubble) guided from the spring receiving hole to the communication hole through the path is further guided to the passage by the working liquid flowing toward the passage through the communication hole. Note that, the air (air bubble) guided to the passage is further guided out of the housing by the working liquid flowing from the passage out of the housing.

Therefore, in a case where the seat member has the inlet port and the guide member has the outlet port, and in a case where the inlet port and the valve hole directly communicate to each other, when the working liquid is caused to flow from the inlet port toward the outlet port, the air inside the electromagnetic valve (including the air bubble stagnating in the spring receiving hole) can be discharged to the outside (out of the housing). Note that, in a case where the seat member has the outlet port and the guide member has the inlet port, the working liquid is caused to flow from the outlet port toward the inlet port only during air discharging work, and thus the air inside the electromagnetic valve can be discharged to the outside.

Thus, the present invention is suitably applicable to the electromagnetic valve in which the plunger has formed therein the communication hole passing through the plunger in the axial direction so as to communicate to the passage at one end of the communication hole and to the receiving portion of the spring at another end of the communication hole, and the spring receiving hole formed at another end portion of the plunger so as to receive the spring.

According to one embodiment of the present invention (claim 3), there is provided an electromagnetic valve, including:
a housing having an inlet port and an outlet port for a working liquid, a passage for communicating the inlet port and the outlet port to each other, and a valve hole formed in the passage with a valve seat formed at one end portion of the valve hole;
a plunger received in the housing so as to be movable in an axial direction of the plunger, the plunger including a valve portion seatable on and unseatable from the valve seat;
a spring received in the housing so as to bias the plunger in the axial direction; and
a solenoid assembled to the housing so as to generate an attractive force against a load of the spring for the plunger through energization,
the plunger having formed therein:
   a plurality of communication holes each passing through the plunger in the axial direction so as to communicate to the passage at one end of each of the plurality of communication holes and to a receiving portion of the spring at another end of the each of the plurality of communication holes;
   a first path for communicating a part of the each of the plurality of communication holes and one end of a spring receiving hole for receiving the spring; and
   a second path for communicating another part of the each of the plurality of communication holes and another end of the spring receiving hole for receiving the spring.

In this electromagnetic valve (electromagnetic valve according to claim 3), when the working liquid is filled into the electromagnetic valve, the working liquid is caused to flow toward the plunger through the valve hole under the state in which the valve portion is unseated from the valve seat. Then, a part of the working liquid is caused to flow toward one end of the spring receiving hole through a part of the plurality of communication holes and the first path, and then flow toward the other end of the spring receiving hole. Further, the working liquid flowing into the other end of the spring receiving hole is then caused to flow toward the passage through the second path and another part of the plurality of communication holes. At this time, the working liquid flowing from one end of the spring receiving hole toward the other end of the spring receiving hole guides the air (air bubble) stagnating in the spring receiving hole to the passage. Note that, the air (air bubble) guided to the passage is further guided out of the housing by the working liquid flowing from the passage out of the housing.

Therefore, in a case where the seat member has the inlet port and the guide member has the outlet port, and in a case where the inlet port and the valve hole directly communicate to each other, when the working liquid is caused to flow from the inlet port toward the outlet port, the air inside the electromagnetic valve (including the air bubble stagnating in the spring receiving hole) can be discharged to the outside (out of the housing). Note that, in a case where the seat member has the outlet port and the guide member has the inlet port, the working liquid is caused to flow from the outlet port toward the inlet port only during air discharging work, and thus the air inside the electromagnetic valve can be discharged to the outside.

Thus, the present invention is suitably applicable to the electromagnetic valve in which the air is liable to stagnate in the spring receiving hole but is difficult to discharge therefrom. The above-mentioned spring receiving hole may be formed in the stationary core serving as a part of the housing. In this case, the present invention (invention according to claim 4) may be carried out. Alternatively, the above-mentioned spring receiving hole may be formed in the plunger. In this case, the present invention (invention according to claim 5) may be carried out.

According to one embodiment of the present invention (claim 6), there is provided an electromagnetic valve, including:
a housing having an inlet port and an outlet port for a working liquid, a passage for communicating the inlet port and the outlet port to each other, and a valve hole formed in the passage with a valve seat formed at one end portion of the valve hole;
a plunger received in the housing so as to be movable in an axial direction of the plunger, the plunger including a valve portion seatable on and unseatable from the valve seat;
a spring received in the housing so as to bias the plunger in the axial direction; and
a solenoid assembled to the housing so as to generate, through energization, an attractive force against a load of the spring in a region between the plunger and a stationary core provided in the housing,
the plunger having formed therein a plurality of communication holes each passing through the plunger in the axial direction so as to communicate to the passage at one end of each of the plurality of communication holes and to a receiving portion of the spring at another end of the each of the plurality of communication holes,
the attractive force including, in a predetermined direction, a predetermined amount of a component acting in a direction perpendicular to the axial direction,
the outlet port or the inlet port being formed only on the same side as in the direction perpendicular to the axial direction, in which the plunger is attracted by the attractive force.

In this electromagnetic valve (electromagnetic valve according to claim 6), the attractive force obtained through the energization of the solenoid includes, in the predetermined direction, the predetermined amount of the component acting in the direction perpendicular to the axial direction. Therefore, at the time of energization of the solenoid, the plunger moves in the direction perpendicular to the axial direction and also moves in the axial direction against the spring. Incidentally, under a state in which the plunger moves in the direction perpendicular to the axial direction, the radial clearance formed between the plunger and the housing is reduced on one side (side on which the outlet port or the inlet port is formed) but increased on the other side, with the result that the resistance of the channel on one side becomes larger than the resistance of the channel on the other side. Therefore, when the working liquid is caused to flow from the inlet port toward the outlet port in this state, the brake fluid is caused to flow into the communication hole arranged on one side (part of the plurality of communication holes) from the communication hole arranged on the other side (remaining part of the plurality of communication holes).

Thus, when the working liquid is filled into the electromagnetic valve, the working liquid is caused to flow from the inlet port toward the outlet port through the energization of the solenoid (through repetition of energization and non-energization as necessary). Then, a part of the working liquid is caused to flow from one end portion of the plunger toward the other end portion of the plunger through the communication hole arranged on the other side (remaining part of the plurality of communication holes). Further, the working liquid flowing into the other end portion of the plunger is then caused to flow from the other end portion of the plunger toward one end portion of the plunger through the communication hole arranged on one side (part of the plurality of communication holes), and then flow toward the outlet port through the passage. At this time, the working liquid flowing in the above-mentioned manner guides the air inside the electromagnetic valve from the respective portions to the outlet port, to thereby discharge the air out of the electromagnetic valve through the outlet port. Therefore, when the working liquid is caused to flow from the inlet port toward the outlet port, the air inside the electromagnetic valve can be discharged to the outside.

When carrying out the present invention (invention according to claim 6), the plunger or the stationary core may be formed into an axially asymmetric shape (for example, a shape in which a cutout is formed in a circumferential direction at a part of the plunger or the stationary core so as to reduce the attractive force obtained at that portion as compared to the attractive force obtained at another portion) (invention according to claim 7).

### Brief Description of Drawings

FIG. 1 is a vertical sectional view illustrating a first embodiment of an electromagnetic valve (normally-closed electromagnetic valve) according to the present invention.
FIG. 2 is a right-hand side view illustrating a state in which a solenoid is removed from the electromagnetic valve illustrated in FIG. 1.
FIG. 3 is an enlarged main part sectional view of FIG. 1.
FIG. 4 is a right-hand side view illustrating a plunger illustrated in FIGS. 1 and 3.
FIG. 5 is a right-hand side view illustrating a first modified embodiment of the plunger illustrated in FIG. 4 (embodiment in which eight communication holes and eight paths are formed).
FIG. 6 is a right-hand side view illustrating a second modified embodiment of the plunger illustrated in FIG. 4 (embodiment in which eight communication holes and two paths are formed).
FIG. 7 is a main part vertical sectional view illustrating an embodiment in which an annular flange portion is formed on an outer circumference of a movable core of the plunger of the electromagnetic valve illustrated in FIG. 1.
FIG. 8 is an enlarged main part sectional view of FIG. 7.
FIG. 9 is a perspective view illustrating the plunger illustrated in FIGS. 7 and 8.
FIG. 10 is a vertical sectional view illustrating a second embodiment of an electromagnetic valve according to the present invention.
FIG. 11 is a right-hand side view illustrating a state in which a solenoid is removed from the electromagnetic valve illustrated in FIG. 10.
FIG. 12 is a right-hand side view illustrating a plunger illustrated in FIG. 10.
FIG. 13 is a right-hand side view illustrating a modified embodiment of the plunger illustrated in FIG. 12 (embodiment in which a path is formed corresponding to only an upper communication hole).
FIG. 14 is a vertical sectional view illustrating a third embodiment of an electromagnetic valve according to the present invention.
FIG. 15 is a sectional view taken along the line A-A of FIG. 14, for illustrating a state in which a solenoid is removed from the electromagnetic valve illustrated in FIG. 14.
FIG. 16 is a perspective view illustrating a stationary core illustrated in FIG. 14.
FIG. 17 is an exploded perspective view illustrating the stationary core illustrated in FIG. 16.
FIG. 18 is a vertical sectional view illustrating a modified embodiment of the electromagnetic valve illustrated in FIG. 14.
FIG. 19 is a vertical sectional view illustrating a fourth embodiment of an electromagnetic valve according to the present invention.
FIG. 20 is a right-hand side view illustrating a state in which a solenoid is removed from the electromagnetic valve illustrated in FIG. 19.
FIG. 21 is a vertical sectional view illustrating a fifth embodiment of an electromagnetic valve according to the present invention (embodiment in which a cutout is formed in a circumferential direction at a part of an end portion of a plunger (lower right side of FIG. 21)).
FIG. 22 is an enlarged main part sectional view illustrating a modified embodiment of the electromagnetic valve illustrated in FIG. 21 (embodiment in which the cutout is formed in the circumferential direction at a part of an end portion of a stationary core (lower left side of FIG. 22)).

### Description of Embodiments

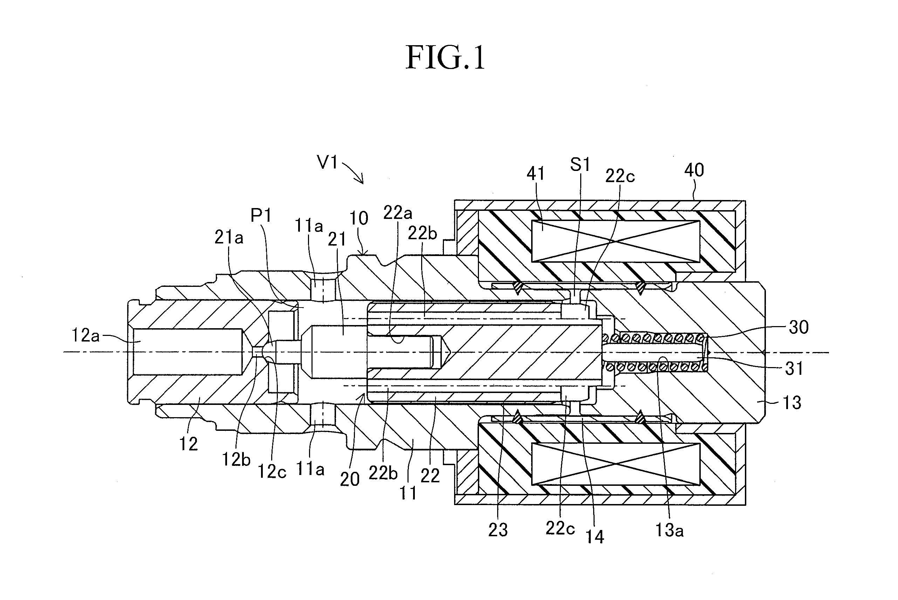

Now, embodiments of the present invention are described referring to the drawings. FIGS. 1 to 4 illustrate a first embodiment of an electromagnetic valve according to the present invention. An electromagnetic valve V1 of this embodiment is, for example, a normally-closed electromagnetic valve to be assembled to a hydraulic control device for a hydraulic brake device for a vehicle, and to be used for hydraulic control of a brake fluid. In the electromagnetic valve V1, a plunger 20, a spring 30, a solenoid 40, and the like are assembled to a housing 10.

The housing 10 includes a cylindrical guide member 11 configured to receive the plunger 20, the spring 30, and the like inside, and to assist axial movement of the plunger 20, and a cylindrical seat member 12 assembled to an inner circumference of a left end portion of the guide member 11 of FIG. 1 in a liquid-tight manner so as to be positionally adjustable in the axial direction. Further, the housing 10 includes a stationary core 13 arranged so as to be opposed to a right end portion of the guide member 11 of FIG. 1 at a predetermined distance away therefrom in the axial direction, and a sleeve 14 configured to integrally couple the stationary core 13 and the guide member 11 to each other.

The guide member 11 is made of a magnetic substance, and has a plurality of outlet ports 11a formed radially at an axially intermediate portion of the guide member 11. The seat member 12 is made of a magnetic substance (may be made of a non-magnetic substance), and has an inlet port 12a for a brake fluid, which is formed at an axis center portion of the seat member 12, and a valve hole 12b and a valve seat 12c, which are formed coaxially with the inlet port 12a. The inlet port 12a and the outlet ports 11a are communicable to each other through a passage P1 formed in the housing 10. The valve hole 12b having the valve seat 12c at one end portion thereof (right end portion of FIG. 1) is formed in the passage P1. Therefore, in this embodiment, when the electromagnetic valve V1 is opened (when a valve portion 21 a of a valve element 21 of the plunger 20 is separated from the valve seat 12c), the brake fluid flowing from the outside of the housing 10 into the inlet port 12a is caused to flow toward the outlet ports 11 a through the valve hole 12b and the valve seat 12c formed in the passage P1, and then caused to flow out of the housing 10.

The stationary core 13 is made of a magnetic substance, and has a receiving hole 13a formed at an axis center portion of a left end portion of the stationary core 13 of FIG. 1 so as to receive the spring 30 and a stopper 31. The sleeve 14 is made of a non-magnetic substance, and is coupled, in a liquid-tight manner, to each of an outer circumference of the right end portion of the guide member 11 of FIG. 1 and an outer circumference of the left end portion of the stationary core 13 of FIG. 1. With the above-mentioned structure of the housing 10, an annular space portion S1 is formed on an inner side of the sleeve 14 at a position between the end portion of the guide member 11 and the end portion of the stationary core 13.

The plunger 20 includes the valve element 21 made of a non-magnetic substance, and a columnar movable core 22 made of a magnetic substance. The valve element 21 includes the valve portion 21 a arranged so as to be opposed to the seat member 12 and seatable on and unseatable from the valve seat 12c. Further, the valve element 21 is fitted and fixed to a mounting hole 22a formed in an axis center of a left end portion of the movable core 22 of FIG. 1, thereby being movable integrally with the movable core 22. The movable core 22 is assembled to the guide member 11 so as to be movable in the axial direction (slidable in a lateral direction of FIG. 1). A thin sleeve 23 made of a non-magnetic substance is assembled to an outer circumference of the movable core 22. Note that, a desired gap is set between the guide member 11 and the thin sleeve 23 (plunger 20), thereby securing axial slidability of the plunger 20 relative to the guide member 11 and fluidity (flowability) of the brake fluid.

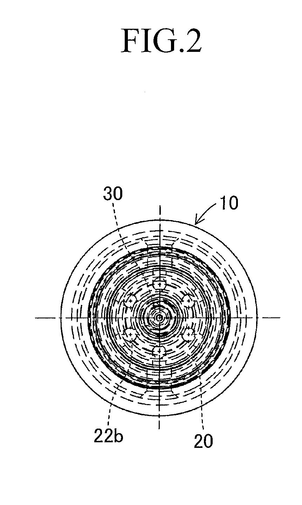

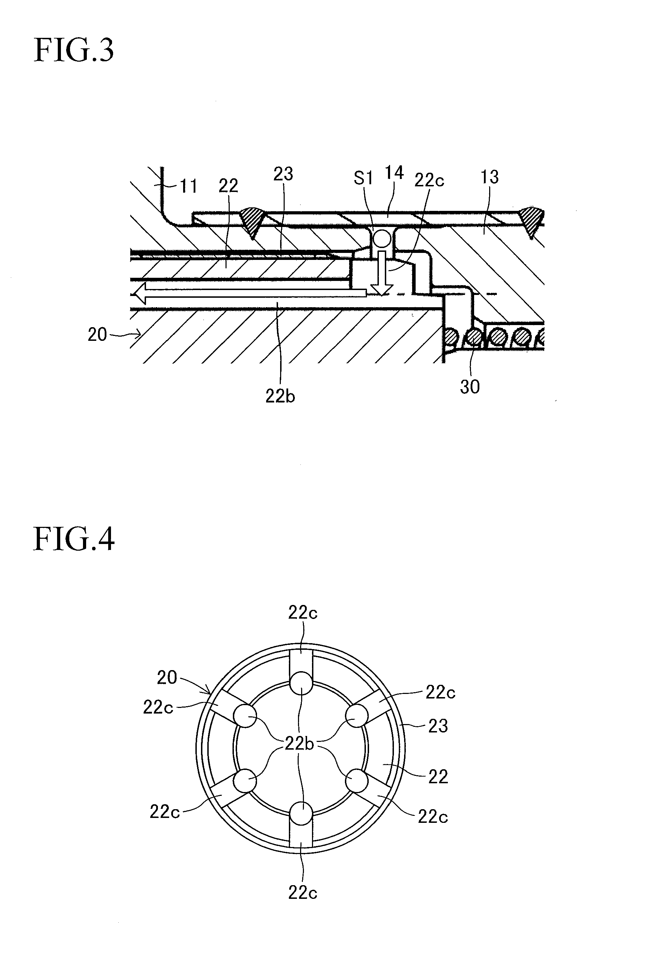

Incidentally, in this embodiment, six (see FIGS. 2 and 4) communication holes 22b are formed in the movable core 22 so as to communicate a left end (left fluid chamber) of FIG. 1 and a right end (right fluid chamber) of FIG. 1. Each communication hole 22b passes through the movable core 22 in the axial direction so as to communicate to the passage P1 at one end (left end of FIG. 1) and to the receiving portion of the spring 30 at the other end (right end of FIG. 1). Further, six cutouts (paths) 22c are formed at a right end portion of the movable core 22 of FIG. 1 so as to communicate the end portions of the respective communication holes 22b and the annular space portion S1 formed in the housing 10 (see FIGS. 1 and 4).

The spring 30 is configured to bias the plunger 20 in a seating direction (axial direction) toward the valve seat 12c, and is interposed between the stationary core 13 and the movable core 22 of the plunger 20 under a state in which the spring 30 is received in the receiving hole 13a formed in the stationary core 13. The stopper 31 is a rod-like member, and is received in an axis center portion of the spring 30, to thereby regulate the amount of axial movement of the plunger 20 relative to the housing 10 at a predetermined amount.

The solenoid 40 includes a coil 41, and is mounted on the outer circumference of the right end portion of the guide member 11 of FIG. 1, an outer circumference of the sleeve 14, and the outer circumference of the stationary core 13. When energized, the coil 41 is configured to form a magnetic path by the guide member 11 and the stationary core 13 of the housing 10, the movable core 22 of the plunger 20, and the like (configured to generate an attractive force against a load of the spring 30 for the plunger 20 through the energization of the coil 41).

In the electromagnetic valve V1, the guide member 11, the stationary core 13, the movable core 22 of the plunger 20, and the like are each made of a magnetic material, and the sleeve 14 is made of a non-magnetic material. Accordingly, the annular space portion S1 (region in which the magnetic path is not easily formed) can be formed on the inner side of the sleeve 14 at the position between the end portion of the guide member 11 and the end portion of the stationary core 13. Therefore, a desired magnetic path can appropriately be formed between the housing 10 and the plunger 20, thereby being capable of attaining desired performance.

In the electromagnetic valve V1 of the first embodiment, which is constructed as described above, when the brake fluid is filled into the electromagnetic valve V1, the brake fluid is caused to flow toward the plunger 20 through the inlet port 12a and the valve hole 12b under a state in which the valve portion 21a of the valve element 21 is unseated from the valve seat 12c. Then, a part of the brake fluid is caused to flow toward a connection portion between the annular space portion S1 and each cutout (path) 22c through a gap between the plunger 20 and the guide member 11 (specifically, a gap between the thin sleeve 23 and the guide member 11). Further, the brake fluid flowing into the connection portion between the space portion S1 and the cutout (path) 22c is then caused to flow toward the passage P1 through the cutout (path) 22c and the communication hole 22b. Note that, a part of the brake fluid flowing into the connection portion between the space portion S1 and the cutout (path) 22c is caused to flow into the receiving hole 13a of the stationary core 13 and the like, and then flow toward the passage P1 through the cutout (path) 22c and the communication hole 22b.

At this time, the brake fluid flowing from the connection portion between the space portion S1 and the cutout (path) 22c toward the passage P1 (toward the left of FIG. 3) through the cutout (path) 22c and the communication hole 22b (see the white arrows of FIG. 3) guides an air bubble stagnating in the space portion S1 (see the white circle of FIG. 3) to the passage P1. Further, at this time, the brake fluid flowing toward the passage P1 guides an air bubble stagnating on an upper side of the receiving portion of the spring 30 (for example, on an upper side of the receiving hole 13a) to the passage P1. Still further, the air (air bubble) guided to the passage P1 is further guided out of the housing 10 by the brake fluid flowing from the passage P1 out of the housing 10. Therefore, when the brake fluid is caused to flow from the inlet port 12a toward the outlet port 11 a, the air inside the electromagnetic valve V1 (including the air bubble stagnating in the space portion S1 and the air bubble stagnating on the upper side of the receiving portion of the spring 30) can be discharged to the outside (out of the housing 10).

Note that, the above-mentioned operation of the first embodiment is directed to an example at the time when the brake fluid is filled into the electromagnetic valve V1, but the brake fluid is not necessarily caused to flow as described above inside the electromagnetic valve V1. When the brake fluid is filled into the electromagnetic valve V1, for example, the brake fluid may be caused to flow into the receiving portion of the spring 30 through the communication hole 22b located on the lower side of FIG. 1, then flow inside the receiving portion from the lower side to the upper side, and then flow into the passage P1 through the communication hole 22b located on the upper side of FIG. 1. In any case, when the brake fluid is filled into the electromagnetic valve V1, the brake fluid is caused to flow into the passage P1 through each communication hole 22b, the gap between the plunger 20 and the guide member 11, the cutout (path) 22c communicating to the annular space portion S1, the receiving portion of the spring 30, and the like. Therefore, the air stagnating in each communication hole 22b, the gap between the plunger 20 and the guide member 11, the cutout (path) 22c, the annular space portion S1, the receiving portion of the spring 30, and the like is guided to the passage P1 together with the brake fluid, with the result that the air is discharged from the passage P1 to the outside.

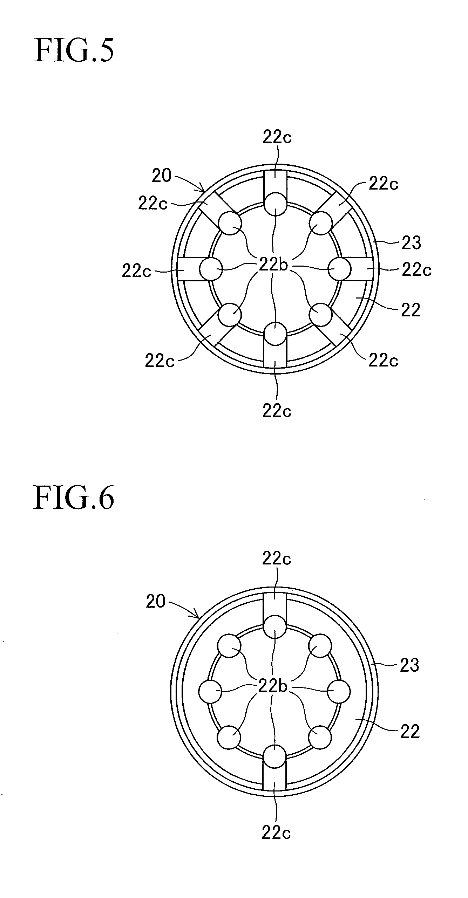

In the above-mentioned first embodiment, the present invention is carried out by forming the six communication holes 22b and the six cutouts (paths) 22c in the movable core 22 of the plunger 20, but the number of the communication holes 22b and the number of the cutouts (paths) 22c may be increased or decreased as appropriate. As in a first modified embodiment illustrated in FIG. 5, the present invention may be carried out by forming eight communication holes 22b and eight cutouts (paths) 22c in the movable core 22 of the plunger 20. Further, in the above-mentioned first embodiment, the present invention is carried out by forming the cutouts (paths) 22c corresponding to all the communication holes 22b. As in a second modified embodiment illustrated in FIG. 6, the present invention may be carried out by forming the cutouts (paths) 22c corresponding to only two upper and lower communication holes out of the eight communication holes 22b.

In the second modified embodiment illustrated in FIG. 6, when the brake fluid is filled, a part of the brake fluid is caused to flow toward the connection portion between the annular space portion S1 and the cutout (path) 22c through the gap between the plunger 20 and the guide member 11, and another part of the brake fluid is caused to flow toward the connection portion between the annular space portion S1 and the cutout (path) 22c through the communication hole 22b having no cutout 22c formed corresponding thereto, and through a gap between the plunger 20 and the stationary core 13 (receiving portion of the spring 30), to thereby merge together.

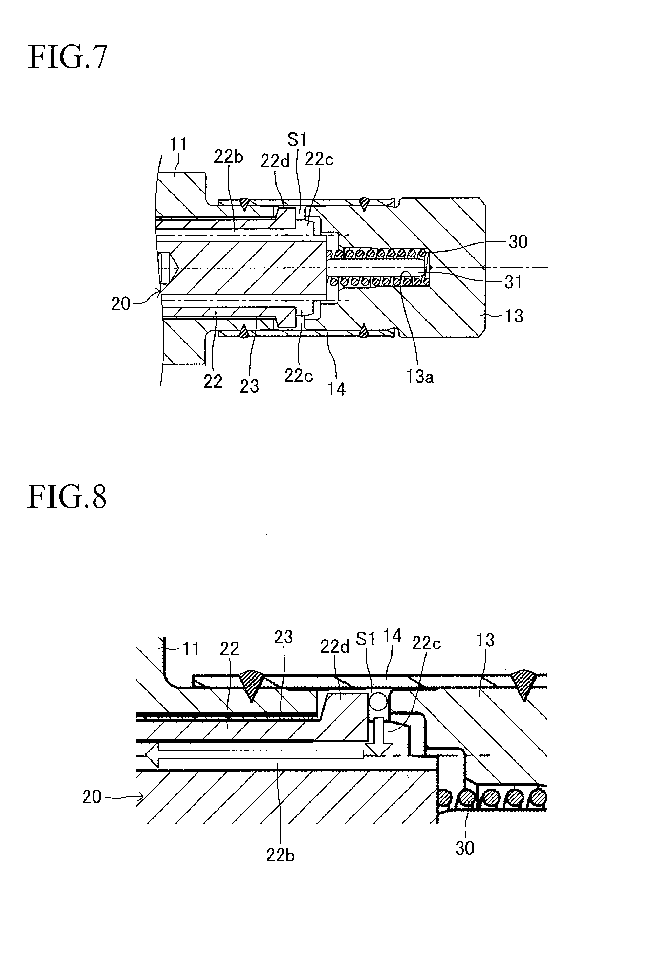

In each of the above-mentioned embodiments (embodiments illustrated in FIGS. 1 to 6), the outer circumference of the movable core 22 of the plunger 20 is formed into a straight shape. As in an embodiment illustrated in FIGS. 7 to 9, the present invention may be carried out by forming an annular flange portion 22d on the outer circumference of the movable core 22 of the plunger 20. In this embodiment, the axial length of the annular space portion S1 is set larger than the axial length of the annular space portion S1 in each of the above-mentioned embodiments (embodiments illustrated in FIGS. 1 to 6) so that the annular flange portion 22d may be received in the annular space portion S1.

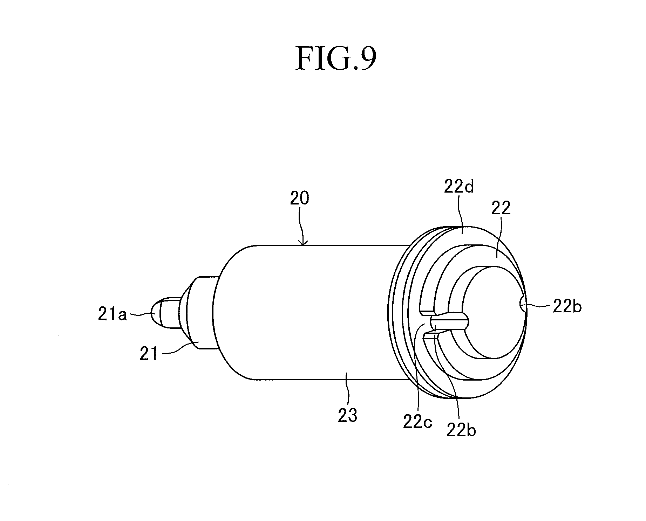

In the embodiment illustrated in FIGS. 7 to 9, the brake fluid flowing toward the connection portion between the annular space portion S1 and the cutout (path) 22c through the gap between the plunger 20 and the guide member 11 is caused to flow from the gap between the plunger 20 and the guide member 11 into the annular space portion S1 and the cutout (path) 22c through a gap between the annular flange portion 22d and the sleeve 14. Therefore, in this embodiment, the air discharging efficiency is higher than that in each of the embodiments illustrated in FIGS. 1 to 6. Note that, in the embodiment illustrated in FIGS. 7 to 9, as is apparent from FIG. 9, two communication holes 22b and two cutouts (paths) 22c are formed in the movable core 22 of the plunger 20.

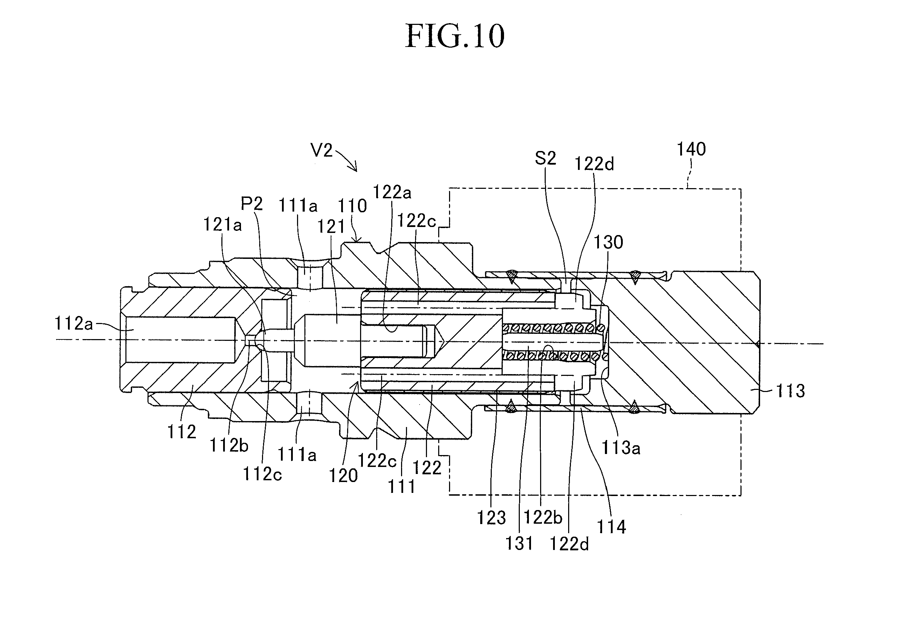

FIGS. 10 to 12 illustrate a second embodiment of an electromagnetic valve according to the present invention. An electromagnetic valve V2 of this embodiment is, for example, a normally-closed electromagnetic valve to be assembled to a hydraulic control device for a hydraulic brake device for a vehicle, and to be used for hydraulic control of a brake fluid. In the electromagnetic valve V2, a plunger 120, a spring 130, a solenoid 140, and the like are assembled to a housing 110.

The housing 110 includes a cylindrical guide member 111 configured to receive the plunger 120, the spring 130, and the like inside, and to assist axial movement of the plunger 120, and a cylindrical seat member 112 assembled to an inner circumference of a left end portion of the guide member 111 of FIG. 10 in a liquid-tight manner so as to be positionally adjustable in the axial direction. Further, the housing 110 includes a stationary core 113 arranged so as to be opposed to a right end portion of the guide member 111 of FIG. 10 at a predetermined distance away therefrom in the axial direction, and a sleeve 114 configured to integrally couple the stationary core 113 and the guide member 111 to each other.

The guide member 111 is made of a magnetic substance, and has a plurality of outlet ports 111 a formed radially at an axially intermediate portion of the guide member 111. The seat member 112 is made of a non-magnetic substance, and has an inlet port 112a for a brake fluid, which is formed at an axis center portion of the seat member 112, and a valve hole 112b and a valve seat 112c, which are formed coaxially with the inlet port 112a. The inlet port 112a and the outlet ports 111 a are communicable to each other through a passage P2 formed in the housing 110. The valve hole 112b having the valve seat 112c at one end portion thereof (right end portion of FIG. 10) is formed in the passage P2. Therefore, in this embodiment, when the electromagnetic valve V2 is opened (when a valve portion 121a of a valve element 121 of the plunger 120 is separated from the valve seat 112c), the brake fluid flowing from the outside of the housing 110 into the inlet port 112a is caused to flow toward the outlet ports 111a through the valve hole 112b and the valve seat 112c formed in the passage P2, and then caused to flow out of the housing 110.

The stationary core 113 is made of a magnetic substance, and has a recessed portion 113a formed at an axis center portion of a left end portion of the stationary core 113 of FIG. 10 so that an end portion of the spring 130 engages with the recessed portion 113a constantly and an end portion of a stopper 131 engages with the recessed portion 113a as necessary. The sleeve 114 is made of a non-magnetic substance, and is coupled, in a liquid-tight manner, to each of an outer circumference of the right end portion of the guide member 111 of FIG. 10 and an outer circumference of the left end portion of the stationary core 113 of FIG. 10. With the above-mentioned structure of the housing 110, an annular space portion S2 is formed on an inner side of the sleeve 114 at a position between the end portion of the guide member 111 and the end portion of the stationary core 113.

The plunger 120 includes the valve element 121 made of a non-magnetic substance, and a columnar movable core 122 made of a magnetic substance. The valve element 121 includes the valve portion 121 a arranged so as to be opposed to the seat member 112 and seatable on and unseatable from the valve seat 112c. Further, the valve element 121 is fitted and fixed to a mounting hole 122a formed in an axis center of a left end portion of the movable core 122 of FIG. 10, thereby being movable integrally with the movable core 122. The movable core 122 is assembled to the guide member 111 so as to be movable in the axial direction (slidable in a lateral direction of FIG. 101). A thin sleeve 123 made of a non-magnetic substance is assembled to an outer circumference of the movable core 122. Note that, a desired gap is set between the guide member 111 and the thin sleeve 123, thereby securing axial slidability of the plunger 120 relative to the guide member 111 and fluidity (flowability) of the brake fluid.

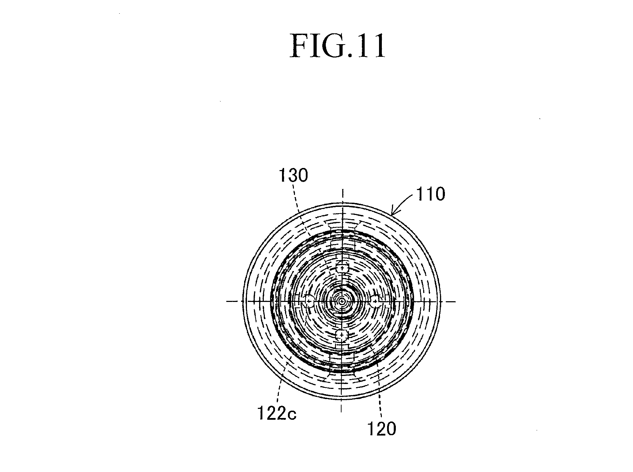

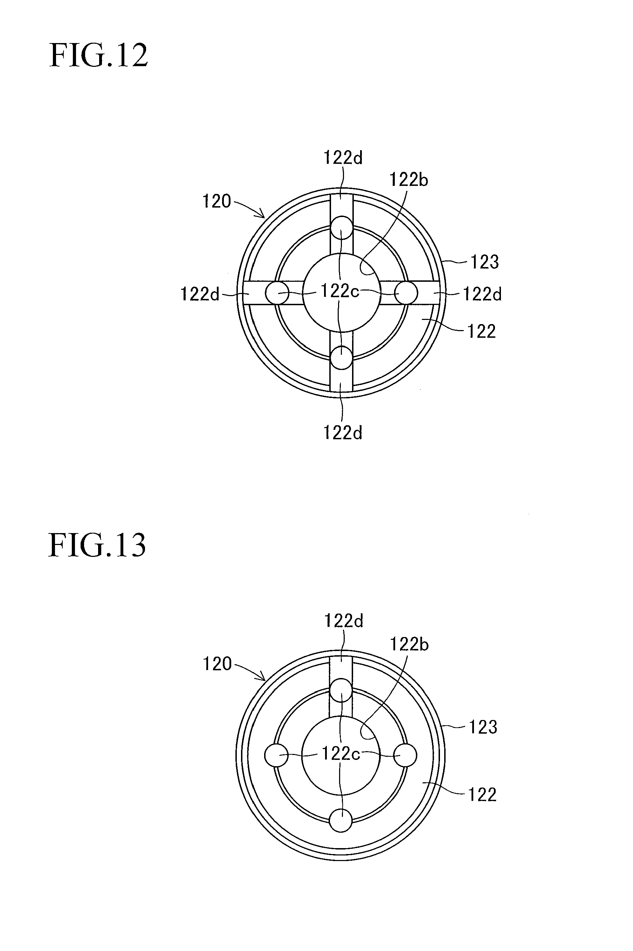

Incidentally, in this embodiment, a receiving hole 122b is formed at an axis center of a right end portion of the movable core 122 of FIG. 10 so as to receive the spring 130 and the stopper 131. Further, in this embodiment, four (see FIGS. 11 and 12) communication holes 122c are formed in the movable core 122 so as to communicate a left end (left fluid chamber) of FIG. 10 and a right end (right fluid chamber) of FIG. 10. Each communication hole 122c passes through the movable core 122 in the axial direction so as to communicate to the passage P2 at one end (left end of FIG. 10) and to the receiving portion of the spring 130 at the other end (right end of FIG. 10). Further, in this embodiment, four cutouts (paths) 122d are formed at a right end portion of the movable core 122 of FIG. 10 so as to communicate the receiving hole 122b and each communication hole 122c, and to communicate the end portions of the respective communication holes 122c and the annular space portion S2 formed in the housing 110 (see FIGS. 11 and 12).

The spring 130 is configured to bias the plunger 120 in a seating direction (axial direction) toward the valve seat 112c, and is interposed between the stationary core 113 and the movable core 122 under a state in which the spring 130 is received in the receiving hole 122b of the movable core 122. The stopper 131 is a rod-like member, and is received in an axis center portion of the spring 130, to thereby regulate the amount of axial movement of the plunger 120 relative to the housing 110 at a predetermined amount.

The solenoid 140 indicated by an imaginary line in FIG. 10 includes a coil (not shown), and is mounted on the outer circumference of the right end portion of the guide member 111 of FIG. 10, an outer circumference of the sleeve 114, and the outer circumference of the stationary core 113. When energized, the coil (not shown) is configured to form a magnetic path by the guide member 111 and the stationary core 113 of the housing 110, the movable core 122 of the plunger 120, and the like (configured to generate an attractive force against a load of the spring 130 for the plunger 120 through the energization of the coil).

In the electromagnetic valve V2, the guide member 111, the stationary core 113, the movable core 122 of the plunger 120, and the like are each made of a magnetic material, and the sleeve 114 is made of a non-magnetic material. Accordingly, the annular space portion S2 (region in which the magnetic path is not easily formed) can be formed on the inner side of the sleeve 114 at the position between the end portion of the guide member 111 and the end portion of the stationary core 113. Therefore, a desired magnetic path can appropriately be formed between the housing 110 and the plunger 120, thereby being capable of attaining desired performance.

In the electromagnetic valve V2 of the second embodiment, which is constructed as described above, when the brake fluid is filled into the electromagnetic valve V2, due to such arrangement that one of the communication holes 122c is positioned above the receiving hole 122b, an air bubble (air) stagnating in the receiving hole 122b can be guided to the communication hole 122c through the cutout (path) 122d with a buoyant force of the air bubble. Further, the brake fluid is caused to flow toward the plunger 120 through the inlet port 112a and the valve hole 112b under a state in which the valve portion 121 a of the valve element 121 is unseated from the valve seat 112c. Then, a part of the brake fluid is caused to flow toward a connection portion between the annular space portion S2 and each cutout (path) 122d (right end portion of the plunger 120 of FIG. 10) through a gap between the plunger 120 and the guide member 111 (specifically, a gap between the thin sleeve 23 and the guide member 11). Further, the brake fluid flowing into the connection portion between the space portion S2 and the cutout (path) 122d is then caused to flow toward the passage P2 through the cutout (path) 122d and the communication hole 122c. Note that, a part of the brake fluid flowing into the connection portion between the space portion S2 and the cutout (path) 122d is caused to flow into the receiving hole 122b through the cutout (path) 122d, and then flow toward the passage P2 through the cutout (path) 122d and the communication hole 122c.

At this time, the brake fluid flowing from the connection portion between the space portion S2 and the cutout (path) 122d toward the passage P2 through the cutout (path) 122d and the communication hole 122c guides, to the passage P2 through the communication hole 122c, an air bubble (air) stagnating in the space portion S2 and an air bubble guided from the receiving hole 122b to the communication hole 122c through the cutout (path) 122d. Further, the air (air bubble) guided to the passage P2 is further guided out of the housing 110 by the brake fluid flowing from the passage P2 out of the housing 110. Therefore, when the brake fluid is caused to flow from the inlet port 112a toward the outlet port 111 a, the air inside the electromagnetic valve V2 (including the air inside the space portion S2 and the air inside the receiving hole 122b) can be discharged to the outside (out of the housing 110).

Note that, the above-mentioned operation of the second embodiment is directed to an example at the time when the brake fluid is filled into the electromagnetic valve V2, but the brake fluid is not necessarily caused to flow as described above inside the electromagnetic valve V2. When the brake fluid is filled into the electromagnetic valve V2, for example, the brake fluid flowing from the passage P2 toward the cutout (path) 122d may be caused to flow from the passage P2 toward the cutout (path) 122d through the communication hole 122c located on the lower side of FIG. 10. In any case, when the brake fluid is filled into the electromagnetic valve V2, the brake fluid is caused to flow into the passage P2 through each communication hole 122c, the gap between the plunger 120 and the guide member 111, the annular space portion S2, the cutout (path) 122d, the receiving hole 122b, and the like. Therefore, the air stagnating in each communication hole 122c, the gap between the plunger 120 and the guide member 111, the annular space portion S2, the cutout (path) 122d, the receiving hole 122b, and the like is guided to the passage P2 together with the brake fluid, with the result that the air is discharged from the passage P2 to the outside.

In the above-mentioned second embodiment, the present invention is carried out by forming the four communication holes 122c and the four cutouts (paths) 122d in the movable core 122 of the plunger 120, but the number of the communication holes 122c and the number of the cutouts (paths) 122d may be increased or decreased as appropriate. Further, in the above-mentioned second embodiment, the present invention is carried out by forming the cutouts (paths) 122d corresponding to all the communication holes 122c. As in a modified embodiment illustrated in FIG. 13, the present invention may be carried out by forming the cutout (path) 122d corresponding to only one communication hole 122c arranged on the upper side when the brake fluid is filled.

Still further, in the above-mentioned second embodiment, the present invention is carried out by forming the cutouts (paths) 122d corresponding to all the communication holes 122c so as to facilitate the guiding of the air bubble (air) stagnating in the annular space portion S2 to the passage P2. The present invention may be carried out by omitting the annular space portion S2 from the housing 110 (that is, the present invention may be carried out by forming the housing (110) without the annular space portion (S2)). In this case, a cutout (path) for only communicating the receiving hole (122b) and each communication hole (122c) needs to be employed instead of the above-mentioned cutout (path) 122d.

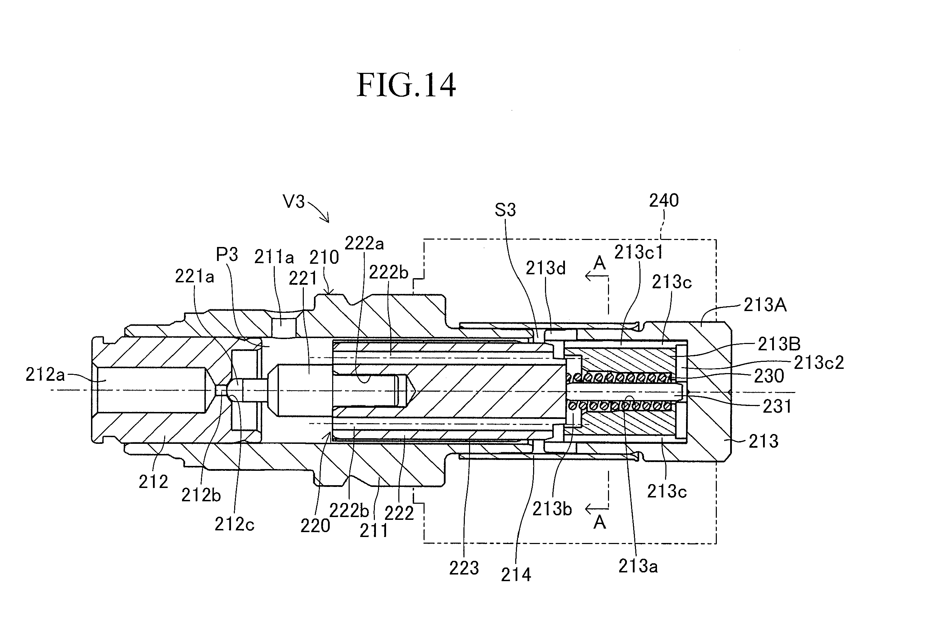

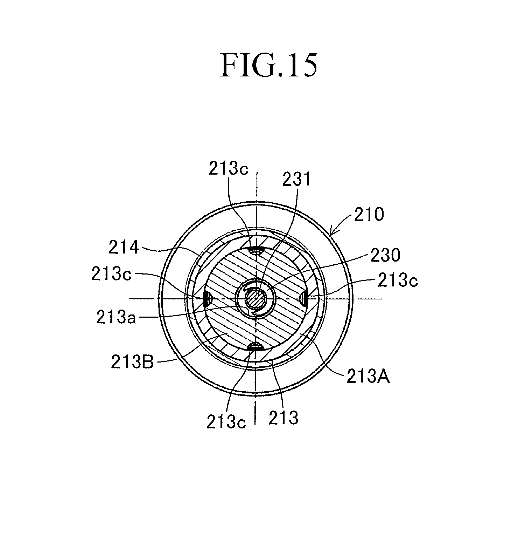

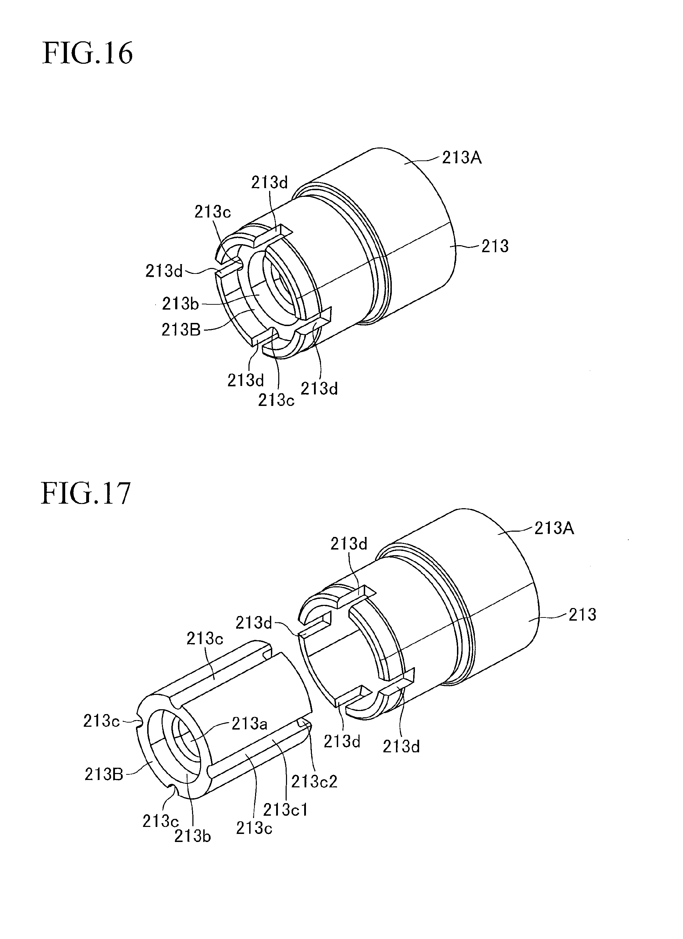

FIGS. 14 to 17 illustrate a third embodiment of an electromagnetic valve according to the present invention. An electromagnetic valve V3 of this embodiment is, for example, a normally-closed electromagnetic valve to be assembled to a hydraulic control device for a hydraulic brake device for a vehicle, and to be used for hydraulic control of a brake fluid. In the electromagnetic valve V3, a plunger 220, a spring 230, a solenoid 240, and the like are assembled to a housing 210.

The housing 210 includes a cylindrical guide member 211 configured to receive the plunger 220, the spring 230, and the like inside, and to assist axial movement of the plunger 220, and a cylindrical seat member 212 assembled to an inner circumference of a left end portion of the guide member 211 of FIG. 14 in a liquid-tight manner so as to be positionally adjustable in the axial direction. Further, the housing 210 includes a stationary core 213 arranged so as to be opposed to a right end portion of the guide member 211 of FIG. 14 at a predetermined distance away therefrom in the axial direction, and a sleeve 214 configured to integrally couple the stationary core 213 and the guide member 211 to each other.

The guide member 211 is made of a magnetic substance, and has one outlet port 211a (a plurality of outlet ports 211 a may be formed) formed radially at an axially intermediate portion of the guide member 211 (upper side of FIG. 14). The seat member 212 is made of a non-magnetic substance, and has an inlet port 212a for a brake fluid, which is formed at an axis center portion of the seat member 212, and a valve hole 212b and a valve seat 212c, which are formed coaxially with the inlet port 212a. The inlet port 212a and the outlet port 211 a are communicable to each other through a passage P3 formed in the housing 210. The valve hole 212b having the valve seat 212c at one end portion thereof (right end portion of FIG. 14) is formed in the passage P3. Therefore, in this embodiment, when the electromagnetic valve V3 is opened (when a valve portion 221 a of a valve element 221 of the plunger 220 is separated from the valve seat 212c), the brake fluid flowing from the outside of the housing 210 into the inlet port 212a is caused to flow toward the outlet port 211 a through the valve hole 212b and the valve seat 212c formed in the passage P3, and then caused to flow out of the housing 210.

The stationary core 213 is made of a magnetic substance, and has a receiving hole 213a formed at an axis center portion of a left end portion of the stationary core 213 of FIG. 14 so as to receive the spring 230 and a stopper 231. The stationary core 213 is formed of an outer member 213A and an inner member 213B, and is integrally provided through fitting between the two members 213A and 213B. The sleeve 214 is made of a non-magnetic substance, and is coupled, in a liquid-tight manner, to each of an outer circumference of the right end portion of the guide member 211 of FIG. 14 and an outer circumference of the left end portion of the stationary core 213 of FIG. 14. With the above-mentioned structure of the housing 210, an annular space portion S3 is formed on an inner side of the sleeve 214 at a position between the end portion of the guide member 211 and the end portion of the stationary core 213.

The plunger 220 includes the valve element 221 made of a non-magnetic substance, and a columnar movable core 222 made of a magnetic substance. The valve element 221 includes the valve portion 221 a arranged so as to be opposed to the seat member 212 and seatable on and unseatable from the valve seat 212c. Further, the valve element 221 is fitted and fixed to a mounting hole 222a formed in an axis center of a left end portion of the movable core 222 of FIG. 14, thereby being movable integrally with the movable core 222. The movable core 222 is assembled to the guide member 211 so as to be movable in the axial direction (slidable in a lateral direction of FIG. 14). A thin sleeve 223 made of a non-magnetic substance is assembled to an outer circumference of the movable core 222. Note that, a desired gap is set between the guide member 211 and the thin sleeve 223, thereby securing axial slidability of the plunger 220 relative to the guide member 211 and fluidity (flowability) of the brake fluid.

Incidentally, in this embodiment, four communication holes 222b are formed in the movable core 222 so as to communicate a left end (left fluid chamber) of FIG. 14 and a right end (right fluid chamber) of FIG. 14. Each communication hole 222b passes through the movable core 222 in the axial direction so as to communicate to the passage P3 at one end (left end of FIG. 14) and to the receiving portion of the spring 230 at the other end (right end of FIG. 14). Further, in this embodiment, a first path 213b is formed in the stationary core 213 so as to communicate the other end (right end of FIG. 14) of the communication hole 222b and one end (left end of FIG. 14) of the receiving hole 213a for receiving the spring 230, whereas second paths 213c are each formed in the stationary core 213 so as to communicate the other end (right end of FIG. 14) of the communication hole 222b and the other end (right end of FIG. 14) of the receiving hole 213a for receiving the spring 230. Still further, third paths 213d are each formed in the stationary core 213 so as to communicate the annular space portion S3 to the other end (right end of FIG. 14) of the communication hole 222b and the second path 213c.

The first path 213b is formed by forming a recessed portion at one end portion (left end portion of FIG. 14) of the inner member 213B of the stationary core 213. Besides, four second paths 213c are formed between the outer member 213A and the inner member 213B of the stationary core 213 by forming grooves 213c1 extending in the axial direction on an outer circumference of the inner member 213B and also forming grooves 213c2 extending in the radial direction at the other end portion of the inner member 213B. Four third paths 213d are formed by forming cutouts at one end portion of the outer member 213A of the stationary core 213.

The spring 230 is configured to bias the plunger 220 in a seating direction (axial direction) toward the valve seat 212c, and is interposed between the stationary core 213 and the movable core 222 under a state in which the spring 230 is received in the receiving hole 213a of the stationary core 213. The stopper 231 is a rod-like member, and is received in an axis center portion of the spring 230, to thereby regulate the amount of axial movement of the plunger 220 relative to the housing 210 at a predetermined amount.

The solenoid 240 indicated by an imaginary line in FIG. 14 includes a coil (not shown), and is mounted on the outer circumference of the right end portion of the guide member 211 of FIG. 14, an outer circumference of the sleeve 214, and the outer circumference of the stationary core 213. When energized, the coil (not shown) is configured to form a magnetic path by the guide member 211 and the stationary core 213 of the housing 210, the movable core 222 of the plunger 220, and the like (configured to generate an attractive force against a load of the spring 230 for the plunger 220 through the energization of the coil).

In the electromagnetic valve V3, the guide member 211, the stationary core 213, the movable core 222 of the plunger 220, and the like are each made of a magnetic material, and the sleeve 214 is made of a non-magnetic material. Accordingly, the annular space portion S3 (region in which the magnetic path is not easily formed) can be formed on the inner side of the sleeve 214 at the position between the end portion of the guide member 211 and the end portion of the stationary core 213. Therefore, a desired magnetic path can appropriately be formed between the housing 210 and the plunger 220, thereby being capable of attaining desired performance.

In the electromagnetic valve V3 of the third embodiment, which is constructed as described above, when the brake fluid is filled into the electromagnetic valve V3, the brake fluid is caused to flow toward the plunger 220 through the inlet port 212a and the valve hole 212b under a state in which the valve portion 221 a of the valve element 221 is unseated from the valve seat 212c. Then, a part of the brake fluid is caused to flow toward the annular space portion S3 through a gap between the plunger 220 and the guide member 211. Further, a part of the brake fluid flowing into the space portion S3 is caused to flow toward the other end (right end of FIG. 14) of the receiving hole 213a through the third path 213d and the second path 213c. Further, the brake fluid flowing into the other end (right end of FIG. 14) of the receiving hole 213a is caused to flow toward the other end (right end of FIG. 14) of the communication hole 222b through the receiving hole 213a and the first path 213b, and then flow toward the passage P3 through the communication hole 222b.

At this time, the brake fluid flowing from the space portion S3 toward the passage P3 through the third path 213d, the second path 213c, the receiving hole 213a, the first path 213b, the communication hole 222b, and the like guides, to the passage P3, air (air bubbles) stagnating in the space portion S3, the third path 213d, the second path 213c, the receiving hole 213a, the first path 213b, the communication hole 222b, and the like. Further, the air (air bubble) guided to the passage P3 is further guided out of the housing 210 by the brake fluid flowing from the passage P3 out of the housing 210. Therefore, when the brake fluid is caused to flow from the inlet port 212a toward the outlet port 211a, the air inside the electromagnetic valve V3 can be discharged to the outside (out of the housing 210).

Note that, the above-mentioned operation of the third embodiment is directed to an example at the time when the brake fluid is filled into the electromagnetic valve V3, but the brake fluid is not necessarily caused to flow as described above inside the electromagnetic valve V3. When the brake fluid is filled into the electromagnetic valve V3, for example, the brake fluid flowing from the passage P3 toward the other end (right end of FIG. 14) of the receiving hole 213a may be caused to flow from the passage P3 toward the other end (right end of FIG. 14) of the receiving hole 213a through the communication hole 222b and the second path 213c that are located on the lower side of FIG. 14. In any case, when the brake fluid is filled into the electromagnetic valve V3, the brake fluid is caused to flow into the passage P3 through each communication hole 222b, the gap between the plunger 220 and the guide member 211, the annular space portion S3, the first path 213b, the second path 213c, the third path 213d, the receiving hole 213a, and the like. Therefore, the air stagnating in each communication hole 222b, the gap between the plunger 220 and the guide member 211, the annular space portion S3, the first path 213b, the second path 213c, the third path 213d, the receiving hole 213a, and the like is guided to the passage P3 together with the brake fluid, with the result that the air is discharged from the passage P3 to the outside.

In the above-mentioned third embodiment, the present invention is carried out by forming the four communication holes 222b in the movable core 222 of the plunger 220 and also forming the four second paths 213c and the four third paths 213d in the stationary core 313, but the number of the communication holes 222b, the number of the second paths 213c, the number of the third paths 213d, and the like may be increased or decreased as appropriate. Further, in the above-mentioned third embodiment, the present invention is carried out by forming the second paths 213c and the third paths 213d corresponding to all the communication holes 222b. The present invention may be carried out by forming the second path 213c and the third path 213d corresponding to only one communication hole 222b (for example, the communication hole arranged on the lower side of FIG. 14).

Further, in the above-mentioned third embodiment, the present invention is carried out by forming the third paths 213d corresponding to all the communication holes 222b so as to facilitate the guiding of the air stagnating in the annular space portion S3 to the passage P3. The present invention may be carried out by omitting the annular space portion S3 from the housing 210 (that is, the present invention may be carried out by forming the housing (210) without the annular space portion (S3)). In this case, the present invention may be carried out by omitting the portion corresponding to the above-mentioned third path 213d.

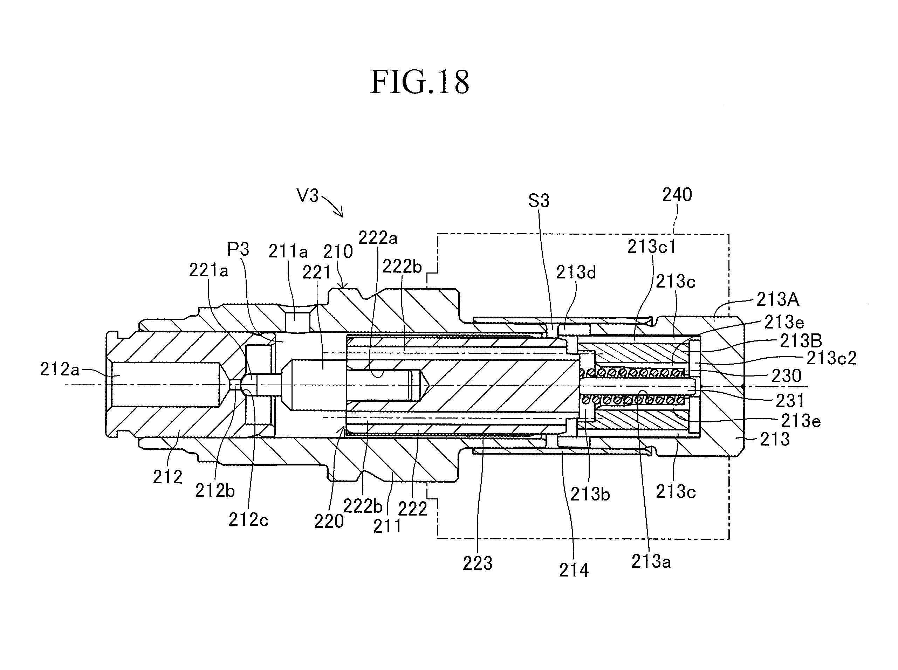

Note that, when carrying out the above-mentioned third embodiment, as in a modified embodiment illustrated in FIG. 18, communication grooves 213e may be formed in the inner member 213B of the stationary core 213. The communication grooves 213e of FIG. 18 each extend in the axial direction along the receiving hole 213a so as to communicate the first path 213b and the second path 213c. Therefore, in the modified embodiment illustrated in FIG. 18, when the brake fluid is filled into the electromagnetic valve V3, the air bubble (air) stagnating in the coil of the spring 230 inside the receiving hole 213a can be discharged appropriately.

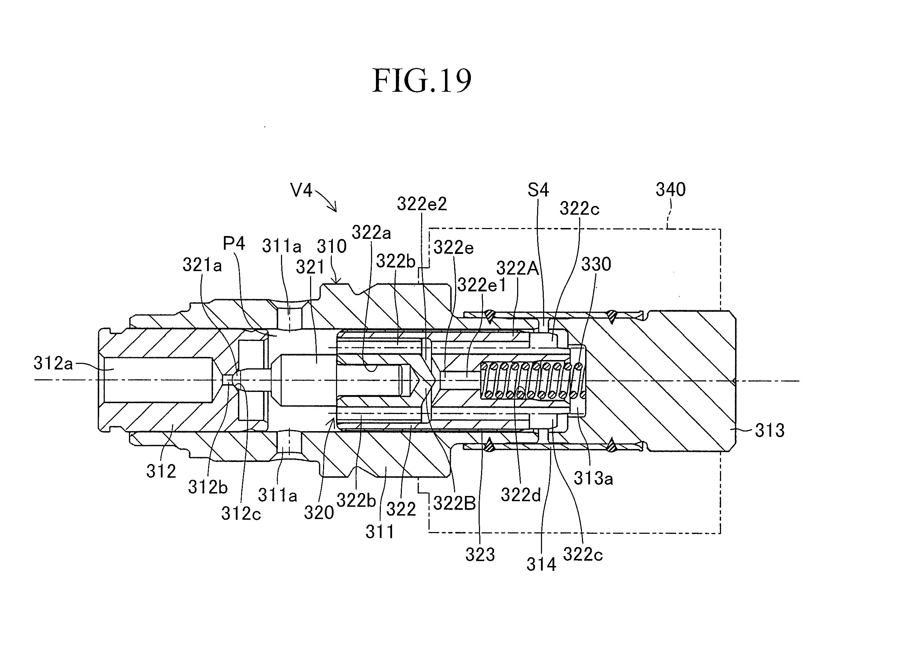

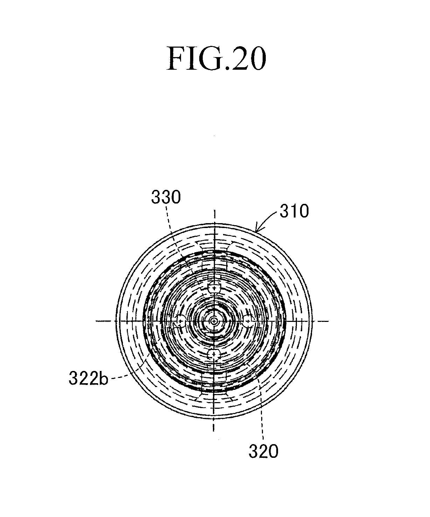

FIGS. 19 and 20 illustrate a fourth embodiment of an electromagnetic valve according to the present invention. An electromagnetic valve V4 of this embodiment is, for example, a normally-closed electromagnetic valve to be assembled to a hydraulic control device for a hydraulic brake device for a vehicle, and to be used for hydraulic control of a brake fluid. In the electromagnetic valve V4, a plunger 320, a spring 330, a solenoid 340, and the like are assembled to a housing 310.

The housing 310 includes a cylindrical guide member 311 configured to receive the plunger 320, the spring 330, and the like inside, and to assist axial movement of the plunger 320, and a cylindrical seat member 312 assembled to an inner circumference of a left end portion of the guide member 311 of FIG. 19 in a liquid-tight manner so as to be positionally adjustable in the axial direction. Further, the housing 310 includes a stationary core 313 arranged so as to be opposed to a right end portion of the guide member 311 of FIG. 19 at a predetermined distance away therefrom in the axial direction, and a sleeve 314 configured to integrally couple the stationary core 313 and the guide member 311 to each other.

The guide member 311 is made of a magnetic substance, and has a plurality of outlet ports 311 a formed radially at an axially intermediate portion of the guide member 311. The seat member 312 is made of a non-magnetic substance, and has an inlet port 312a for a brake fluid, which is formed at an axis center portion of the seat member 312, and a valve hole 312b and a valve seat 312c, which are formed coaxially with the inlet port 312a. The inlet port 312a and the outlet ports 311a are communicable to each other through a passage P4 formed in the housing 310. The valve hole 312b having the valve seat 312c at one end portion thereof (right end portion of FIG. 19) is formed in the passage P4. Therefore, in this embodiment, when the electromagnetic valve V4 is opened (when a valve portion 321a of a valve element 321 of the plunger 320 is separated from the valve seat 312c), the brake fluid flowing from the outside of the housing 310 into the inlet port 312a is caused to flow toward the outlet ports 311a through the valve hole 312b and the valve seat 312c formed in the passage P4, and then caused to flow out of the housing 310.

The stationary core 313 is made of a magnetic substance, and has a receiving hole 313a formed at an axis center portion of a left end portion of the stationary core 313 of FIG. 19 so as to receive the spring 330. The sleeve 314 is made of a non-magnetic substance, and is coupled, in a liquid-tight manner, to each of an outer circumference of the right end portion of the guide member 311 of FIG. 19 and an outer circumference of the left end portion of the stationary core 313 of FIG. 19. With the above-mentioned structure of the housing 310, an annular space portion S4 is formed on an inner side of the sleeve 314 at a position between the end portion of the guide member 311 and the end portion of the stationary core 313.

The plunger 320 includes the valve element 321 made of a non-magnetic substance, and a columnar movable core 322 made of a magnetic substance. The valve element 321 includes the valve portion 321 a arranged so as to be opposed to the seat member 312 and seatable on and unseatable from the valve seat 312c. Further, the valve element 321 is fitted and fixed to a mounting hole 322a formed in an axis center of a left end portion of the movable core 322 of FIG. 19, thereby being movable integrally with the movable core 322.

The movable core 322 is assembled to the guide member 311 so as to be movable in the axial direction (slidable in a lateral direction of FIG. 19). The movable core 322 is formed of an outer member 322A and an inner member 322B, and is integrally provided through fitting between the two members 322A and 322B. A thin sleeve 323 made of a non-magnetic substance is assembled to an outer circumference of the movable core 322. Note that, a desired gap is set between the guide member 311 and the thin sleeve 323, thereby securing axial slidability of the plunger 320 relative to the guide member 311 and fluidity (flowability) of the brake fluid.

Incidentally, in this embodiment, four communication holes 322b are formed in the movable core 322 so as to communicate a left end (left fluid chamber) of FIG. 19 and a right end (right fluid chamber) of FIG. 19. Each communication hole 322b passes through the movable core 322 in the axial direction so as to communicate to the passage P4 at one end (left end of FIG. 19) and to the receiving portion of the spring 330 at the other end (right end of FIG. 19). Further, four cutouts (paths) 322c are formed at a right end portion of the movable core 322 of FIG. 19 so as to communicate the end portions of the respective communication holes 322b and the annular space portion S4 formed in the housing 310. Note that, the mounting hole 322a of the movable core 322 is formed in the inner member 322B. Further, each communication hole 322b of the movable core 322 is formed in the outer member 322A and the inner member 322B. Still further, each cutout (path) 322c of the movable core 322 is formed in the outer member 322A.

Further, in this embodiment, a receiving hole 322d of the spring 330 is formed in the movable core 322. Still further, a first path 313a is formed in the stationary core 313. The first path 313a is formed by forming a recessed portion at the axis center portion of the left end of the stationary core 313 of FIG. 19, to thereby communicate a right end of the receiving hole 322d of FIG. 19 and a right end of each communication hole 322b of FIG. 19. In addition, second paths 322e are formed in the movable core 322. The second paths 322e are formed by forming a communication hole 322e1 at an axis center portion of the outer member 322A of the movable core 322 and also forming communication paths 322e2 between the outer member 322A and the inner member 322B of the movable core 322, to thereby communicate an axially intermediate portion of each communication hole 322b and a left end of the receiving hole 322d of FIG. 19. Note that, the receiving hole 322d of the movable core 322 is formed in the outer member 322A.

The spring 330 is configured to bias the plunger 320 in a seating direction (axial direction) toward the valve seat 312c, and is interposed between the stationary core 313 and the movable core 322 under a state in which the spring 330 is received in the receiving hole 322d of the stationary core 322.

The solenoid 340 indicated by an imaginary line in FIG. 19 includes a coil (not shown), and is mounted on the outer circumference of the right end portion of the guide member 311 of FIG. 19, an outer circumference of the sleeve 314, and the outer circumference of the stationary core 313. When energized, the coil (not shown) is configured to form a magnetic path by the guide member 311 and the stationary core 313 of the housing 310, the movable core 322 of the plunger 320, and the like (configured to generate an attractive force against a load of the spring 330 for the plunger 320 through the energization of the coil).

In the electromagnetic valve V4, the guide member 311, the stationary core 313, the movable core 322 of the plunger 320, and the like are each made of a magnetic material, and the sleeve 314 is made of a non-magnetic material. Accordingly, the annular space portion S4 (region in which the magnetic path is not easily formed) can be formed on the inner side of the sleeve 314 at the position between the end portion of the guide member 311 and the end portion of the stationary core 313. Therefore, a desired magnetic path can appropriately be formed between the housing 310 and the plunger 320, thereby being capable of attaining desired performance.

In the electromagnetic valve V4 of the fourth embodiment, which is constructed as described above, when the brake fluid is filled into the electromagnetic valve V4, the brake fluid is caused to flow toward the plunger 320 through the valve hole 312b under a state in which the valve portion 321a of the valve element 321 is unseated from the valve seat 312c. Then, a part of the brake fluid is caused to flow toward the annular space portion S3 through a gap between the plunger 320 and the guide member 311. Further, a part of the brake fluid flowing into the space portion S4 is then caused to flow toward the passage P4 through the cutout (path) 322c and the communication hole 322b of the movable core 322. Still further, another part of the brake fluid flowing into the space portion S4 is caused to flow into the first path 313a through the cutout (path) 322c and the communication hole 322b of the movable core 322, and further flow toward the passage P4 through the receiving hole 322d, the second path 313e, and the communication hole 322b of the movable core 322.

At this time, the brake fluid flowing from the space portion S4 toward the passage P4 through the cutout (path) 322c and the communication hole 322b guides, to the passage P4, air bubbles stagnating in the space portion S4, the cutout (path) 322c, the communication hole 322b, and the like. Further, the brake fluid flowing from the space portion S4 toward the passage P4 through the cutout (path) 322c, the communication hole 322b, the first path 313a, the receiving hole 322d, the second path 322e, and the communication hole 322b guides, to the passage P4, air (air bubbles) stagnating in the space portion S4, the cutout (path) 322c, the communication hole 322b, the first path 313a, the receiving hole 322d, the second path 322e, and the like. Still further, the air (air bubble) guided to the passage P4 is further guided out of the housing 310 by the brake fluid flowing from the passage P4 out of the housing 310. Therefore, when the brake fluid is caused to flow from the inlet port 312a toward the outlet port 311 a, the air inside the electromagnetic valve V4 can be discharged to the outside (out of the housing 310).

Note that, the above-mentioned operation of the fourth embodiment is directed to an example at the time when the brake fluid is filled into the electromagnetic valve V4, but the brake fluid is not necessarily caused to flow as described above inside the electromagnetic valve V4. When the brake fluid is filled into the electromagnetic valve V4, for example, the brake fluid flowing from the passage P4 toward the other end (right end of FIG. 19) of the receiving hole 322d may be caused to flow from the passage P3 toward the other end (right end of FIG. 19) of the receiving hole 322d through the communication hole 322b located on the lower side of FIG. 19 and the first path 313a. In any case, when the brake fluid is filled into the electromagnetic valve V4, the brake fluid is caused to flow into the passage P4 through each communication hole 322b, the gap between the plunger 320 and the guide member 311, the annular space portion S4, the first path 313a, the receiving hole 322d, the second path 322e, and the like. Therefore, the air stagnating in each communication hole 322b, the gap between the plunger 320 and the guide member 311, the annular space portion S4, the first path 313a, the receiving hole 322d, the second path 322e, and the like is guided to the passage P4 together with the brake fluid, with the result that the air is discharged from the passage P4 to the outside.

In the above-mentioned fourth embodiment, the present invention is carried out by forming the four communication holes 322b and the four second paths 322e in the movable core 322 of the plunger 320 and also forming the first path 313ac in the stationary core 313, but the number of the communication holes 322b, the number of the first paths 313a, the number of the second paths 322e, and the like may be increased or decreased as appropriate. Further, in the above-mentioned fourth embodiment, the present invention is carried out by forming the second paths 322e corresponding to all the communication holes 322b. The present invention may be carried out by forming the second path (322e) corresponding to only one communication hole 322b (communication hole arranged on the upper side of FIG. 19).

Still further, in the above-mentioned fourth embodiment, the present invention is carried out by forming the cutouts (paths) 322c corresponding to all the communication holes 322b so as to facilitate the guiding of the air stagnating in the annular space portion S4 to the passage P4. The present invention may be carried out by omitting the annular space portion S4 from the housing 310 (that is, the present invention may be carried out by forming the housing (310) without the annular space portion (S4)). In this case, the present invention may be carried out by omitting components corresponding to the above-mentioned cutouts (paths) 322c.

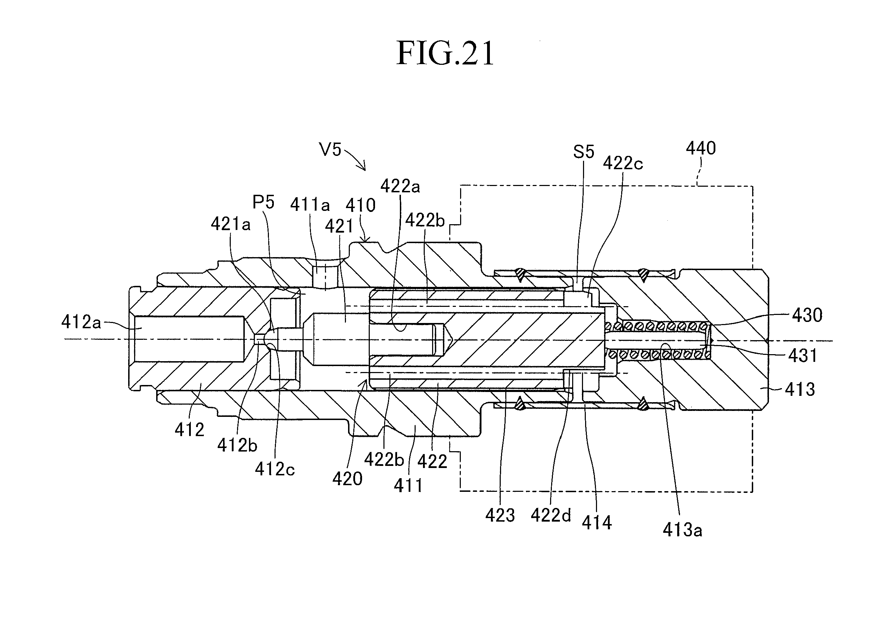

FIG. 21 illustrates a fifth embodiment of an electromagnetic valve according to the present invention. An electromagnetic valve V5 of this embodiment is, for example, a normally-closed electromagnetic valve to be assembled to a hydraulic control device for a hydraulic brake device for a vehicle, and to be used for hydraulic control of a brake fluid. In the electromagnetic valve V5, a plunger 420, a spring 430, a solenoid 440, and the like are assembled to a housing 410.

The housing 410 includes a cylindrical guide member 411 configured to receive the plunger 420, the spring 430, and the like inside, and to assist axial movement of the plunger 420, and a cylindrical seat member 412 assembled to an inner circumference of a left end portion of the guide member 411 of FIG. 21 so as to be positionally adjustable in the axial direction. Further, the housing 410 includes a stationary core 413 arranged so as to be opposed to a right end portion of the guide member 411 of FIG. 21 at a predetermined distance away therefrom in the axial direction, and a sleeve 414 configured to integrally couple the stationary core 413 and the guide member 411 to each other.

The guide member 411 is made of a magnetic substance, and has one outlet port 411a formed radially at an axially intermediate portion of the guide member 411 (upper side of FIG. 21). The seat member 412 is made of a non-magnetic substance, and has an inlet port 412a for a brake fluid, which is formed at an axis center portion of the seat member 412, and a valve hole 412b and a valve seat 412c, which are formed coaxially with the inlet port 412a. The inlet port 412a and the outlet port 411a are communicable to each other through a passage P5 formed in the housing 410. The valve hole 412b having the valve seat 412c at one end portion thereof (right end portion of FIG. 21) is formed in the passage P5. Therefore, in this embodiment, when the electromagnetic valve V5 is opened (when a valve portion 421 a of a valve element 421 of the plunger 420 is separated from the valve seat 412c), the brake fluid flowing from the outside of the housing 410 into the inlet port 412a is caused to flow toward the outlet port 411 a through the valve hole 412b and the valve seat 412c formed in the passage P5, and then caused to flow out of the housing 410.

The stationary core 13 is made of a magnetic substance, and has a receiving hole 413a formed at an axis center portion of a left end portion of the stationary core 413 of FIG. 21 so as to receive the spring 430 and a stopper 431. The sleeve 414 is made of a non-magnetic substance, and is coupled, in a liquid-tight manner, to each of an outer circumference of the right end portion of the guide member 411 of FIG. 21 and an outer circumference of the left end portion of the stationary core 413 of FIG. 21. With the above-mentioned structure of the housing 410, an annular space portion S5 is formed on an inner side of the sleeve 414 at a position between the end portion of the guide member 411 and the end portion of the stationary core 413.

The plunger 420 includes the valve element 421 made of a non-magnetic substance, and a columnar movable core 422 made of a magnetic substance. The valve element 421 includes the valve portion 421 a arranged so as to be opposed to the seat member 412 and seatable on and unseatable from the valve seat 412c. Further, the valve element 421 is fitted and fixed to a mounting hole 422a formed in an axis center of a left end portion of the movable core 422 of FIG. 21, thereby being movable integrally with the movable core 422. The movable core 422 is assembled to the guide member 411 so as to be movable in the axial direction (slidable in a lateral direction of FIG. 21). A thin sleeve 423 made of a non-magnetic substance is assembled to an outer circumference of the movable core 422. Note that, a desired gap is set between the guide member 411 and the thin sleeve 423, thereby securing axial slidability of the plunger 420 relative to the guide member 411 and fluidity (flowability) of the brake fluid.

Incidentally, in this embodiment, a plurality of communication holes 422b are formed in the movable core 422 so as to communicate a left end (left fluid chamber) of FIG. 21 and a right end (right fluid chamber) of FIG. 21. Each communication hole 422b passes through the movable core 422 in the axial direction so as to communicate to the passage P5 at one end (left end of FIG. 21) and to the receiving portion of the spring 430 at the other end (right end of FIG. 21). Further, a cutout (path) 422c is formed at a right end portion of the movable core 422 of FIG. 21 so as to communicate the end portions of the respective communication holes 422b and the annular space portion S5 formed in the housing 410.

Further, in this embodiment, a lower part of the right end portion of the movable core 422 of FIG. 21 is cut out by a predetermined amount so that a cutout 422d is formed in a circumferential direction at a part of the movable core 422. The cutout 422d is formed for the purpose of obtaining, at the time of energization of the solenoid 440, a predetermined amount of a component acting in the axial direction as an attractive force generated between the stationary core 413 and the plunger 420, and also obtaining, in a predetermined direction (toward the upper side of FIG. 21, on which the outlet port 411 a is formed), a predetermined amount of a component acting in a direction perpendicular to the axial direction (reducing the attractive force obtained on the lower side of FIG. 21 by a desired amount as compared to the attractive force obtained on the upper side of FIG. 21). Therefore, at the time of energization of the solenoid 440, due to the attractive force generated between the stationary core 413 and the plunger 420, the plunger 420 is configured to move in the axial direction against the spring 430 and also move toward the upper side of FIG. 21 (direction in which the outlet port 411 a is formed).

The spring 430 is configured to bias the plunger 420 in a seating direction (axial direction) toward the valve seat 412c, and is interposed between the stationary core 413 and the movable core 422 under a state in which the spring 430 is received in the receiving hole 413a of the stationary core 413. The stopper 431 is a rod-like member, and is received in an axis center portion of the spring 430, to thereby regulate the amount of axial movement of the plunger 420 relative to the housing 410 at a predetermined amount.

The solenoid 440 indicated by an imaginary line in FIG. 21 includes a coil (not shown), and is mounted on the outer circumference of the right end portion of the guide member 411 of FIG. 21, an outer circumference of the sleeve 414, and the outer circumference of the stationary core 413. When energized, the coil (not shown) is configured to form a magnetic path by the guide member 411 and the stationary core 413 of the housing 410, the movable core 422 of the plunger 420, and the like (configured to generate an attractive force against a load of the spring 430 for the plunger 420 through the energization of the coil).

In the electromagnetic valve V5, the guide member 411, the stationary core 413, the movable core 422 of the plunger 420, and the like are each made of a magnetic material, and the sleeve 414 is made of a non-magnetic material. Accordingly, the annular space portion S5 (region in which the magnetic path is not easily formed) can be formed on the inner side of the sleeve 414 at the position between the end portion of the guide member 411 and the end portion of the stationary core 413. Therefore, a desired magnetic path can appropriately be formed between the housing 410 and the plunger 420, thereby being capable of attaining desired performance.

In the electromagnetic valve V5 of the fifth embodiment, which is constructed as described above, the attractive force obtained through the energization of the solenoid 440 includes, in the predetermined direction (toward the upper side of FIG. 21), the predetermined amount of the component acting in the direction perpendicular to the axial direction. Therefore, at the time of energization of the solenoid 440, the plunger 420 moves in the direction perpendicular to the axial direction (toward the upper side of FIG. 21) and also moves in the axial direction against the spring 430. Incidentally, under a state in which the plunger 420 moves in the direction perpendicular to the axial direction, the radial clearance formed between the plunger 420 and the housing 410 is reduced on one side (upper side of FIG. 21, on which the outlet port 411 a is formed) but increased on the other side, with the result that the resistance of the channel on one side becomes larger than the resistance of the channel on the other side. Therefore, when the brake fluid is caused to flow from the inlet port 412a toward the outlet port 411a in this state, the brake fluid is caused to flow into the communication hole 422b arranged on one side (communication hole located on the upper side of FIG. 21) from the communication hole 422b arranged on the other side (communication hole located on the lower side of FIG. 21).

Thus, when the working liquid is filled into the electromagnetic valve V5, the brake fluid is caused to flow from the inlet port 412a toward the outlet port 411 a through the energization of the solenoid 440 (through repetition of energization and non-energization as necessary). Then, a part of the brake fluid is caused to flow from the passage P5, that is, from the left to the right of FIG. 21 through the communication hole 422b located on the lower side of FIG. 21 and the gap formed between the plunger 420 and the guide member 411 at a position on the lower side of FIG. 21, then flow toward the upper side of FIG. 21 at a portion in which the spring 430 is received, and then flow from the right to the left of FIG. 21 through the communication hole 422b located on the upper side of FIG. 21, to thereby flow into the passage P5. Note that, the brake fluid flowing into the passage P5 through the communication hole 422b located on the upper side of FIG. 21 is caused to flow out of the electromagnetic valve V5 through the outlet port 411 a,

At this time, the brake fluid flowing in the above-mentioned manner guides the air bubbles (air inside the electromagnetic valve V5) stagnating in each communication hole 222b, the receiving hole 413a, the annular space portion S5, and the like inside the electromagnetic valve V5 from the respective portions to the passage P5, and further guides the air bubbles from the passage P5 toward the outlet port 411 a, to thereby discharge the air bubbles out of the electromagnetic valve V5 through the outlet port 411 a. Therefore, when the brake fluid is caused to flow from the inlet port 412a toward the outlet port 411 a, the air inside the electromagnetic valve V5 can be discharged to the outside.

Note that, the above-mentioned operation of the fifth embodiment is directed to an example at the time when the brake fluid is filled into the electromagnetic valve V5, but the brake fluid is not necessarily caused to flow as described above inside the electromagnetic valve V5. In any case, however, when the brake fluid is filled into the electromagnetic valve V5, the brake fluid is caused to flow into the passage P5 through each communication hole 222b, the receiving hole 413a, the annular space portion S5, and the like. Therefore, the air stagnating in each communication hole 222b, the receiving hole 413a, the annular space portion S5, and the like is guided to the passage P5 and further guided from the passage P5 toward the outlet port 411 a, with the result that the air is discharged out of the electromagnetic valve V5 through the outlet port 411a.

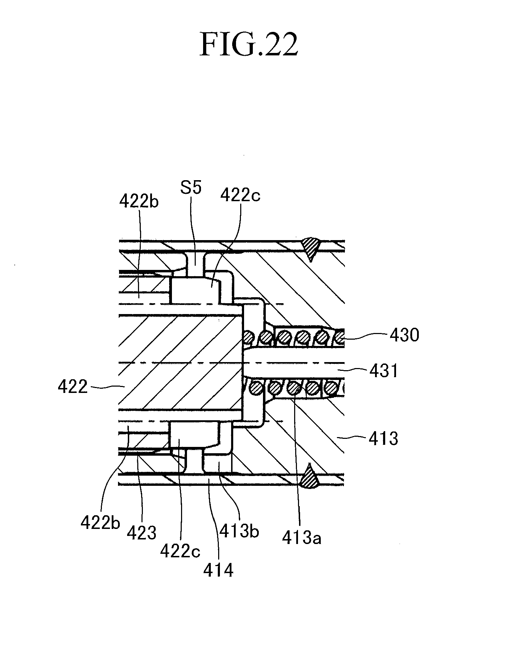

In the above-mentioned fifth embodiment, as illustrated in FIG. 21, the lower part of the right end portion of the movable core 422 of FIG. 21 is cut out by the predetermined amount so that the cutout 422d is formed in the circumferential direction at a part of the movable core 422. As in a modified embodiment illustrated in FIG. 22, the present invention may be carried out by cutting out a lower part of the left end portion of the stationary core 413 of FIG. 22 by a predetermined amount so that a cutout 413b is formed in the circumferential direction at a part of the stationary core 413. The cutout 413b of the stationary core 413 is formed for the purpose of obtaining, at the time of energization of the solenoid 440, a predetermined amount of a component acting in the axial direction as the attractive force generated between the stationary core 413 and the plunger 420, and also obtaining, in a predetermined direction (toward the upper side of FIG. 22, on which the outlet port 411a is formed), a predetermined amount of a component acting in a direction perpendicular to the axial direction (reducing the attractive force obtained on the lower side of FIG. 22 by a desired amount as compared to the attractive force obtained on the upper side of FIG. 22). Note that, the operation of the modified embodiment illustrated in FIG. 22 is substantially the same as the operation of the fifth embodiment illustrated in FIG. 21, and description thereof is therefore omitted herein.

In each of the above-mentioned embodiments, the description is given of the case where the seat member has the inlet port and the guide member has the outlet port. In a case where the seat member has the outlet port and the guide member has the inlet port, the brake fluid is caused to flow from the outlet port toward the inlet port only during air discharging work, and thus the air inside the electromagnetic valve can be discharged to the outside. Further, in each of the above-mentioned embodiments, the description is given of the case where the electromagnetic valve according to the present invention is the normally-closed electromagnetic valve. The electromagnetic valve according to the present invention may be a normally-open electromagnetic valve.

## Claims

1. An electromagnetic valve, comprising:
a housing having an inlet port and an outlet port for a working liquid, a passage for communicating the inlet port and the outlet port to each other, and a valve hole formed in the passage with a valve seat formed at one end portion of the valve hole;
a plunger received in the housing so as to be movable in an axial direction of the plunger, the plunger including a valve portion seatable on and unseatable from the valve seat;
a spring received in the housing so as to bias the plunger in the axial direction; and
a solenoid assembled to the housing so as to generate an attractive force against a load of the spring for the plunger through energization,
the housing comprising:
a guide member having a cylindrical shape and being configured to assist axial movement of the plunger;
a seat member assembled to the guide member with the valve hole formed therein;
a stationary core arranged so as to be opposed to an end portion of the guide member at a predetermined distance away from the guide member in the axial direction; and
a sleeve coupled, in a liquid-tight manner, to each of an outer circumference of an end portion of the stationary core and an outer circumference of the end portion of the guide member so as to integrally couple the stationary core and the guide member to each other,
the plunger having formed therein:
a communication hole passing through the plunger in the axial direction so as to communicate to the passage at one end of the communication hole and to a receiving portion of the spring at another end of the communication hole; and
a path for communicating the communication hole and a space portion formed on an inner side of the sleeve at a position between the end portion of the stationary core and the end portion of the guide member.

2. An electromagnetic valve, comprising:
a housing having an inlet port and an outlet port for a working liquid, a passage for communicating the inlet port and the outlet port to each other, and a valve hole formed in the passage with a valve seat formed at one end portion of the valve hole;
a plunger received in the housing so as to be movable in an axial direction of the plunger, the plunger including a valve portion seatable on and unseatable from the valve seat;
a spring received in the housing so as to bias the plunger in the axial direction; and
a solenoid assembled to the housing so as to generate an attractive force against a load of the spring for the plunger through energization,
the plunger having formed therein:
a communication hole passing through the plunger in the axial direction so as to communicate to the passage at one end of the communication hole and to a receiving portion of the spring at another end of the communication hole;
a spring receiving hole formed at another end portion of the plunger so as to receive the spring; and
a path for communicating the spring receiving hole and the communication hole to each other.

3. An electromagnetic valve, comprising:
a housing having an inlet port and an outlet port for a working liquid, a passage for communicating the inlet port and the outlet port to each other, and a valve hole formed in the passage with a valve seat formed at one end portion of the valve hole;
a plunger received in the housing so as to be movable in an axial direction of the plunger, the plunger including a valve portion seatable on and unseatable from the valve seat;
a spring received in the housing so as to bias the plunger in the axial direction; and
a solenoid assembled to the housing so as to generate an attractive force against a load of the spring for the plunger through energization,
the plunger having formed therein:
a plurality of communication holes each passing through the plunger in the axial direction so as to communicate to the passage at one end of each of the plurality of communication holes and to a receiving portion of the spring at another end of the each of the plurality of communication holes;
a first path for communicating a part of the each of the plurality of communication holes and one end of a spring receiving hole for receiving the spring; and
a second path for communicating another part of the each of the plurality of communication holes and another end of the spring receiving hole for receiving the spring.

4. An electromagnetic valve according to claim 3, wherein the spring receiving hole is formed in a stationary core serving as a part of the housing.

5. An electromagnetic valve according to claim 3, wherein the spring receiving hole is formed in the plunger.

6. An electromagnetic valve, comprising:
a housing having an inlet port and an outlet port for a working liquid, a passage for communicating the inlet port and the outlet port to each other, and a valve hole formed in the passage with a valve seat formed at one end portion of the valve hole;
a plunger received in the housing so as to be movable in an axial direction of the plunger, the plunger including a valve portion seatable on and unseatable from the valve seat;
a spring received in the housing so as to bias the plunger in the axial direction; and
a solenoid assembled to the housing so as to generate, through energization, an attractive force against a load of the spring in a region between the plunger and a stationary core provided in the housing,
the plunger having formed therein a plurality of communication holes each passing through the plunger in the axial direction so as to communicate to the passage at one end of each of the plurality of communication holes and to a receiving portion of the spring at another end of the each of the plurality of communication holes,
the attractive force comprising, in a predetermined direction, a predetermined amount of a component acting in a direction perpendicular to the axial direction,
the outlet port or the inlet port being formed only on a side along the direction perpendicular to the axial direction, in which the plunger is attracted by the attractive force.

7. An electromagnetic valve according to claim 6, wherein the plunger or the stationary core is formed into an axially asymmetric shape.
